# EUROPÄISCHE PATENTSCHRIFT

(11) **EP 0 699 601 B1**
(45) Veröffentlichungstag und Bekanntmachung des Hinweises auf die Patenterteilung: **23.05.2001**
(21) Anmeldenummer: 95113090.5
(22) Anmeldetag: 21.08.1995
(51) Int. Cl.: B65F 3/00, G01V 8/12

(54) **Verfahren und Vorrichtung zum Absichern des Arbeitsbereichs von Entleereinrichtungen**
Method and device for securing the operating range of an emptying device
Procédé et dispositif pour sécuriser la zone de travail d'un dispositif de vidange

(30) Priorität: 31.08.1994 DE 4430833
(43) Veröffentlichungstag der Anmeldung: 06.03.1996
(73) Patentinhaber: Zöller-Kipper GmbH, 55130 Mainz (DE)
(72) Erfinder: Zhang, Haiping, Dr.Ing., D-55130 Mainz (DE)
(74) Vertreter: Fuchs Mehler Weiss & Fritzsche

(56) Entgegenhaltungen:
- CH-A- 384 078
- DE-B- 1 269 923
- DE-C- 4 128 955
- DE-U- 8 707 192
- US-A- 3 942 601
- US-A- 3 970 846
- US-A- 4 266 124
- US-A- 4 309 696

## Beschreibung

Die Erfindung betrifft ein Verfahren zum Aufnehmen und Entleeren von Müllbehältern in einen Sammelbehälter, bei dem der seitliche Bereich neben der oder den Entleereinrichtungen mittels Barrieren abgesichert wird gemäß dem Oberbegriff des Patentanspruchs 1 bzw. 2. Die Erfindung betrifft auch eine entsprechende Vorrichtung gemäß dem Oberbegriff des Patentanspruchs 10 bzw. 12.

Aus der DE-PS 34 05 997 ist eine Vorrichtung zum Entleeren von Behältern bekannt, bei der der Arbeitsbereich im Umkreis der Kippvorrichtung bzw. Hubkipp-Vorrichtung mittels blockierend auf den Steuerkreis einwirkender Barrieren absicherbar ist. Diese Barrieren sind zum Schutz des Bedienungspersonals und von unbeteiligten Personen, beispielsweise vorübergehenden Passanten, an den Seitenwänden des Müllfahrzeugs oder an der Vorrichtung um eine horizontale Achse schwenkbar gelagert. Es handelt sich hierbei u.a. um Schranken, die in Ruhestellung hochgeschwenkt und in
Arbeitsstellung heruntergeschwenkt sind und dann eine im wesentlichen horizontale Lage einnehmen. In Arbeitsstellung betätigen die Schranken ein Schaltelement, das den Steuerstromkreis für die Entleereinrichtung schließt. In Ruhestellung der Barriereelemente wird dieser Schalter freigegeben, der den Steuerstromkreis unterbricht.

Aus der DE 41 36 045 A1 ist eine Sicherheitsschranke bekannt, die mindestens ein erstes und ein zweites Schrankenteil aufweist, wobei das erste Schrankenteil in Ruhe- und Sicherungsstellung bewegbar ist. Um eine Manipulation durch das Bedienungspersonal zu verhindern und um zu erreichen, daß nur in Sicherungsstellung eine Betätigung der Entleervorrichtung möglich ist, sind alle Bedienungselemente für die Entleervorrichtung an dem ersten beweglichen Schrankenteil angebracht. Das erste bewegliche Schrankenteil wirkt mit dem zweiten Schrankenteil derart zusammen, daß die Bedienungselemente für die Entleereinrichtung in Ruhestellung des ersten beweglichen Schrankenteils nicht zugänglich sind.

Zur Entleerung der Müllgefäße werden diese von den Müllwerkern von hinten an das Müllfahrzeug herangebracht und an die abgesenkte Entleereinrichtung angesetzt oder von dieser vom Boden her aufgenommen. Bei den bekannten Entleereinrichtungen ist dieser Zubringerbereich zwischen den Barrieren während des Entleervorganges jedoch nicht abgesichert.

Die US 3,942,601 beschreibt ein Müllfahrzeug mit Heck- und Frontlader. In beiden Fällen muß der Müllbehälter von Hand entleert werden, wobei im Falle des Frontladers ein an der Entleereinrichtung fest installierter Behälter vorgesehen ist. Seitlich der Entleereinrichtung sind Barrieren angeordnet, die an ihrem freien Ende unmittelbar vor dem fest installierten Behälter eine Lichtschranke aufweisen. Der Zubringerbereich wird nicht durch die Lichtschranken abgesichert, weil der Behälter zum Entleeren in den fest installierten Behälter über die Lichtschranke hinweggehoben wird. Es wird lediglich ein Bereich unterhalb des fest installierten Behälters abgesichert. Die Lichtschranken werden zu Beginn einer Entleerungstour eingeschaltet und nach Beendigung der Tour wieder abgeschaltet, so daß die Lichtschranke nicht nur während der Entleervorgänge, sondern auch in den Pausen aktiv ist.

Aufgabe der Erfindung ist es daher, ein Verfahren und eine Vorrichtung zum Aufnehmen und Entleeren von Müllbehältern bereitzustellen, mit der der Zubringerbereich abgesichert, die Heranbringung und Wegschaffung der Müllbehälter aber nicht behindert wird.

Diese Aufgabe wird mit einem Verfahren gemäß den Merkmalen von Patentanspruch 1 bzw. 2 gelöst und mit einer Vorrichtung gemäß den Merkmalen von Patentanspruch 10 bzw. 12. Vorteilhafte Ausgestaltungen der Erfindung sind
Gegenstand der Unteransprüche.

Die Erfindung geht von der Erkenntnis aus, daß die Absicherung des Zubringerbereichs zwischen den Barrieren nur dann wirksam sein soll, wenn eine Gefährdung von der oder den Entleereinrichtungen für das Bedienungspersonal ausgehen kann. Dies ist in der Regel dann der Fall, wenn der oder die Müllbehälter sich bereits an der Entleereinrichtung befinden und entleert werden.

Es ist gemäß einer ersten Alternative des erfindungsgemäßen Verfahrens vorgesehen, daß der Zubringerbereich zwischen den Barrieren mindestens während eines Zeitabschnittes (Überwachungsphase) des Entleervorganges mittels mindestens einer Lichtschranke abgesichert wird, die bei Unterbrechung den Entleervorgang verhindert oder abbricht, wobei die Lichtschranke bei jedem Entleervorgang erst dann aktiviert wird, wenn die Entleereinrichtung eine vorgegebene Hubhöhe erreicht hat.

Gemäß der zweiten Alternative ist vorgesehen, daß mindestens während eines Zeitabschnittes (Überwachungsphase) des Entleervorgangs der Zubringerbereich zwischen den Barrieren mittels mindestens einer Lichtschranke abgesichert wird, die bei Unterbrechung den Entleervorgang verhindert oder abbricht, wobei die Lichtschranke bei jedem Entleervorgang erst dann aktiviert wird, wenn der Müllbehälter an der Entleereinrichtung verriegelt ist.

Dieser Zeitabschnitt, der als Überwachungsphase bezeichnet wird, kann kürzer oder länger als der Entleervorgang sein, was von den jeweils verwendeten Entleereinrichtungen abhängen kann, die als automatische, halbautomatische oder rein manuelle Entleereinrichtungen ausgelegt sein können. Neben der kinematischen Konzeption der Entleereinrichtungen sind hierbei auch die geltenden Sicherheitsbestimmungen zu berücksichtigen.

Durch die Kombination einer mechanischen mit einer optischen Barriere wird auf einfache Weise eine zuverlässige Absicherung des Arbeitsbereiches der Entleereinrichtung erreicht, ohne daß das Bedienungspersonal in seiner Tätigkeit behindert wird.

Die Überwachungsphase kann vorzugsweise nach Beginn des Entleervorganges beginnen und gegebenenfalls auch vor Vollendung des Entleervorganges beendet werden, wenn sich hierbei der Behälter und die Entleereinrichtung für das Bedienungspersonal jeweils bereits in einer ungefährlichen Höhe befinden. Je nach Auslegung der Entleereinrichtung muß gewährleistet sein, daß nach dem Heranbringen des Müllbehälters das Bedienungspersonal ausreichend Zeit hat, den Arbeitsbereich der Entleereinrichtung zu verlassen, ohne hierbei die bereits aktivierte Lichtschranke zu unterbrechen. Die vorzeitige Beendigung der Überwachungsphase bietet den Vorteil, dem Bedienungspersonal einen früheren Eintritt in den Arbeitsbereich zu ermöglichen.

Mit dem erfindungsgemäßen Verfahren wird zumindest während eines Zeitabschnitts des Entleervorgangs der gesamte Arbeitsbereich der Entleereinrichtung von allen Seiten abgesichert, so daß das Bedienungspersonal und andere Personen während dieses Vorganges nicht gefährdet werden.

Störungen im Betriebszustand herkömmlicher Lichtschranken sind nicht auf Anhieb zu erkennen, wie z.B. Kabelbruch oder Kontaktfehler. Fremdlichtquellen oder Schmutz können ebenfalls die Lichtschranke beeinflussen. Um diese Fehlerquellen auszuschließen, wird nach der Aktivierung die Lichtschranke überprüft, wobei die Prüfphase vorzugsweise vor und/oder nach der Überwachungsphase durchgeführt wird. Hierzu wird vorteilhafterweise der Sender der Lichtschranke nach dem erstmaligen Einschalten kurzzeitig abgeschaltet und der Signalpegel des Empfängers ausgewertet. Bei einwandfreier Funktion der Lichtschranke darf der Empfänger kein Signal liefern. Wenn dies nicht der Fall sein sollte, wird der Entleervorgang entweder gar nicht erst begonnen oder ein bereits eventuell in Gang befindlicher Entleervorgang wird abgebrochen.

Um zu verhindern, daß der Empfänger auf eventuelles Restlicht des Senders reagieren kann, wird die Auswertung des Empfängerpegels nicht mit dem Zeitpunkt des Abschaltens des Senders begonnen, sondern zeitverzögert durchgeführt. Damit wird die Trägheit des Senders, also das verzögerte Erlöschen des Lichtsignals berücksichtigt. Dies bedeutet, daß die Auswertephase erst beginnt, nachdem der Sender, also die Lichtquelle, vollständig erloschen ist.

Die Vorrichtung zum Aufnehmen und Entleeren von Müllbehältern gemäß einer ersten Alternative sieht vor, daß am freien Ende der Barrieren mindestens eine den Zubringerbereich absichernde Lichtschranke angeordnet ist, wobei der Sender an der einen Barriere und der Empfänger gegenüberliegend an der anderen Barriere angebracht ist, daß die Lichtschranke an eine Steuereinrichtung angeschlossen ist, die zur Aktivierung der Lichtschranke während eines Zeitabschnittes (Überwachungsphase) des Entleervorganges und zur Verhinderung oder Unterbrechung des Entleervorgangs bei Unterbrechung der Lichtschranke ausgebildet ist, und daß die Steuereinrichtung die Lichtschranke erst dann aktiviert, wenn die Entleereinrichtung zu Beginn des Entleervorganges eine vorgegebene Hubhöhe erreicht hat.

Gemäß einer zweiten Alternative ist die Vorrichtung dadurch gekennzeichnet, daß am freien Ende der Barrieren mindestens eine den Zubringerbereich absichernde Lichtschranke angeordnet ist, wobei der Sender an der einen Barriere und der Empfänger gegenüberliegend an der anderen Barriere angebracht ist, daß die Lichtschranke an eine Steuereinrichtung angeschlossen ist, die zur Aktivierung der Lichtschranke während eines Zeitabschnittes (Überwachungsphase) des Entleervorganges und zur Verhinderung oder Unterbrechung des Entleervorgangs bei Unterbrechung der Lichtschranke ausgebildet ist, und daß die Steuereinrichtung die Lichtschranke erst dann aktiviert, wenn der Müllbehälter an der Entleereinrichtung verriegelt ist.

Unter einer Lichtschranke wird eine Einrichtung verstanden, die nicht nur mit sichtbarem Licht sondern beispielsweise auch mit Infrarotstrahlung oder Ultraschall arbeiten kann. Geeignet ist jede elektromagnetische Strahlung, die für das Bedienungspersonal ungefährlich und von Personen oder Gegenständen unterbrochen werden kann.

Es hat sich gezeigt, daß Prüfgeräte, die zwischen Sender und Empfänger der Lichtschranke geschaltet sind und nach der sogenannten Selbsttestmethode die Lichtschranke überprüfen, keine Gewähr dafür geben, daß alle Komponenten der Lichtschranke einwandfrei arbeiten. Zwar können damit Fehler im Bereich der Lichtschranke festgestellt werden, nicht aber Fehler des Prüfgerätes selbst oder ein Fehler zwischen Prüfgerät und der Steuerung der Entleereinrichtung. Es hat sich daher als vorteilhaft herausgestellt, Sender und Empfänger der Lichtschranke direkt mit der Steuereinrichtung der Entleereinrichtung zu verbinden. Von dieser Steuereinrichtung geht ein Impuls zum Sender der Lichtschranke, vom Sender geht das Lichtsignal zum Empfänger und vom Empfänger wiederum zur Steuereinrichtung.

Gemäß einer vorteilhaften Ausgestaltung der ersten Alternative kann der Entleereinrichtung in der vorgebenen Hubhöhe mindestens ein erster Positionssensor zugeordnet sein, der an die Steuereinrichtung angeschlossen ist. Wenn die Entleereinrichtung im Rahmen des Entleervorganges sich nach oben bewegt, wird dieser Positionssensor geschaltet, der dann ein entsprechendes Signal an die Steuereinrichtung gibt, die dann wiederum die Lichtschranke aktiviert.

Gemäß der zweiten Alternative, bei der die Lichtschanke erst dann aktiviert wird, wenn der Müllbehälter an der Entleereinrichtung verriegelt ist, ist vorzugsweise ein entsprechender Sensor an der Verriegelungseinrichtung vorgesehen, der mit der Steuereinrichtung verbunden ist.

Um die Funktionsfähigkeit der Lichtschranke mit großer Zuverlässigkeit zu überwachen und um Fehlwirkungen unverzüglich erkennen zu können, ist die Steuereinrichtung zur Überprüfung der Lichtschranke ausgebildet, wobei die Steuereinrichtung zur Durchführung der zuvor beschriebenen Verfahrensmerkmale ausgelegt ist.

Bei der Rückführung der Entleereinrichtung in die Ausgangsstellung wird die Überwachung vorzugsweise beim Erreichen des ersten Positionssensors wieder abgeschaltet. Es kann aber auch gemäß einer weiteren Ausführungsform mindestens ein zweiter Positionssensor in einer anderen Höhe der Entleereinrichtung zugeordnet sein, der ebenfalls an die Steuereinrichtung angeschlossen ist. Beim Zurückbewegen der Entleereinrichtung wird der zweite Positionssensor beaufschlagt, was zur Abschaltung der Lichtschranke führt. Dies bietet den Vorteil, daß die Beendigung der Überwachungsphase in einer anderen Hubhöhe erfolgt, als der Beginn der Überwachungsphase.

Die Prüfphase, die vor und/oder nach der Überwachungsphase durchgeführt werden kann, liegt vorzugsweise in einem Bereich des Weges der Entleereinrichtung, die keine Gefährdung des Bedienungspersonls oder unbeteiligter Dritter erwarten läßt.

Die Steuereinrichtung ist vorzugsweise mit einer Anzeigeeinrichtung verbunden, die die aktive oder inaktive Funktion der Lichtschranke dem Bedienungspersonal optisch oder akustisch anzeigt.

Bei seitlichen Barrieren, die sich sehr weit vom Müllfahrzeug weg erstrecken und eventuell einen größeren Bereich als den Arbeitsbereich der Entleereinrichtung begrenzen können, kann sich unter Umständen das Bedienungspersonal innerhalb dieses abgegrenzten Bereiches aufhalten, ohne daß dies von der an den freien Enden der Barrieren angeordneten Lichtschranke nachgewiesen wird. Zu diesem Zweck ist es vorteilhaft, diese Lichtschranke oder eine zusätzliche Lichtschranke im Aufenthaltsbereich des Bedienungspersonals an den Barrieren anzuordnen.

Die Vorrichtung kann mit unterschiedlich ausgestalteten Barrieren kombiniert werden. Die Barrieren können beliebige mechanische Elemente wie beispielsweise schwenkbare, insbesondere um eine vertikale Achse schwenkbare Schranken oder starr befestigte Abweiser sein.

Die Sicherheit kann dadurch noch weiter verbessert werden, daß die Lichtschranke derart ausgebildet ist, daß beim Anstoßen mindestens einer Barriere die Lichtschranke unterbrochen wird. Dies kann beispielsweise dadurch erreicht werden, daß die Empfängerfläche möglichst klein ausgebildet wird, so daß bereits bei leichtem Anstoßen einer der Barrieren der Lichtstrahl aus dem sensitiven Bereich des Empfängers herauswandert und somit eine Unterbrechung der Lichtschranke nachgewiesen wird.

Beispielhafte Ausführungsformen der Erfindung werden nachfolgend anhand der
Zeichnungen näher erläutert.

Es zeigen:
- Figur 1: eine schematische Darstellung eines Müllfahrzeuges mit einer an der Rückseite des Fahrzeuges angeordneten Entleereinrichtung,
- Figur 2: eine schematische Darstellung des Schaltplanes und
- Figur 3: ein Diagramm zur Erläuterung der Prüf- und der Überwachungsphase während des Entleervorganges.

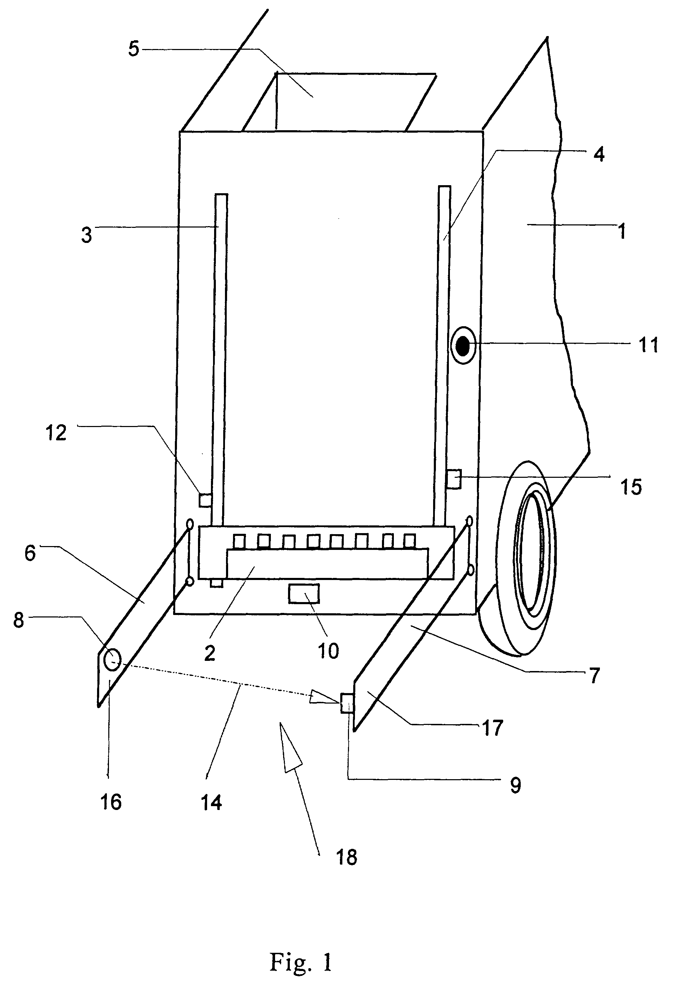

In der Figur 1 ist ein Müllfahrzeug 1 mit einer Entleereinrichtung 2 dargestellt, die an der Rückseite des Müllfahrzeugs 1 an Schienen 3,4 geführt und den nicht dargestellten Müllbehälter in die Einfüllöffnung 5 des Sammelbehälters des Müllfahrzeuges entleert. Der Arbeitsbereich der Entleereinrichtung 2 ist mit seitlichen Barrieren in Art von Schranken 6,7 gegen den seitlichen Zutritt gesichert. Die Barrieren 6,7 sind an ihrem freien Ende 16,17 mit einer Lichtschranke 18 versehen, deren Sender 8 an der Barriere 6 und deren Empfänger 9 an der Barriere 7 angeordnet ist. Bei sehr langen Barrieren 6,7 kann zwischen der Lichtschranke 18 und der Entleereinrichtung 2 gegebenenfalls mindestens noch eine weitere Lichtschranke (nicht dargestellt) an den Barrieren 6,7 angeordnet sein, um im Arbeitsbereich der Entleereinrichtung befindliche Personen während des Entleervorgangs nachzuweisen.

Der Sender 8 und der Empfänger 9 sind elektrisch mit der Steuereinrichtung 10 der Entleereinrichtung verbunden, die an geschützter Stelle an der Entleereinrichtung bzw. am Fahrzeug angeordnet ist. Die Steuereinrichtung 10 ist mit einer Anzeigeeinrichtung 11 im mittleren Bereich der Fahrzeugrückseite verbunden, die die aktive oder inaktive Funktion der Lichtschranke optisch oder akustisch anzeigt. Seitlich der Schienen 3 und 4 ist ein erster Positionssensor 12 und ein zweiter Positionssensor 15 angeordnet, die ebenfalls mit der Steuereinrichtung 10 verbunden sind. Beim Hochfahren der Entleereinrichtung 2 wird in einer vorgegebenen Höhe der erste Positionssensor 12 geschaltet, der dann ein entsprechendes Signal an die Steuereinrichtung 10 gibt, die daraufhin die Lichtschranke 18 aktiviert. Beim Hochfahren der Entleereinrichtung ist der zweite Positionssensor 15 inaktiv.

Nach dem Entleeren des Müllbehälters in die Einfüllöffnung 5 fährt die Entleereinrichtung 2 an den Schienen 3,4 nach unten und bestätigt hierbei in einer anderen vorgegebenen Höhe den zweiten Positionssensor 15, der ein entsprechendes Signal an die Steuereinrichtung 10 abgibt, die daraufhin die Lichtschranke 18 abschaltet, so daß das Bedienungspersonal in den Arbeitsbereich der Entleereinrichtung eintreten und den entleerten Müllbehälter abnehmen kann.

Die Barrieren 6,7 können um eine vertikale Achse beweglich angeordnet sein, so daß bereits dann, wenn eine der Barrieren 6,7 angestoßen wird, der Lichtstrahl 14 aus dem Empfangsbereich des Empfängers 9 herauswandert, woraufhin eine Unterbrechung der Lichtschranke von der Steuereinrichtung 10 erkannt wird, was zur Unterbrechung des Entleervorgangs führt. Anstelle der in Figur 1 gezeigten Entleereinrichtung 2 können auch andere Entleereinrichtungen, wie Kipp- oder Hubkipp-Vorrichtungen vorgesehen sein.

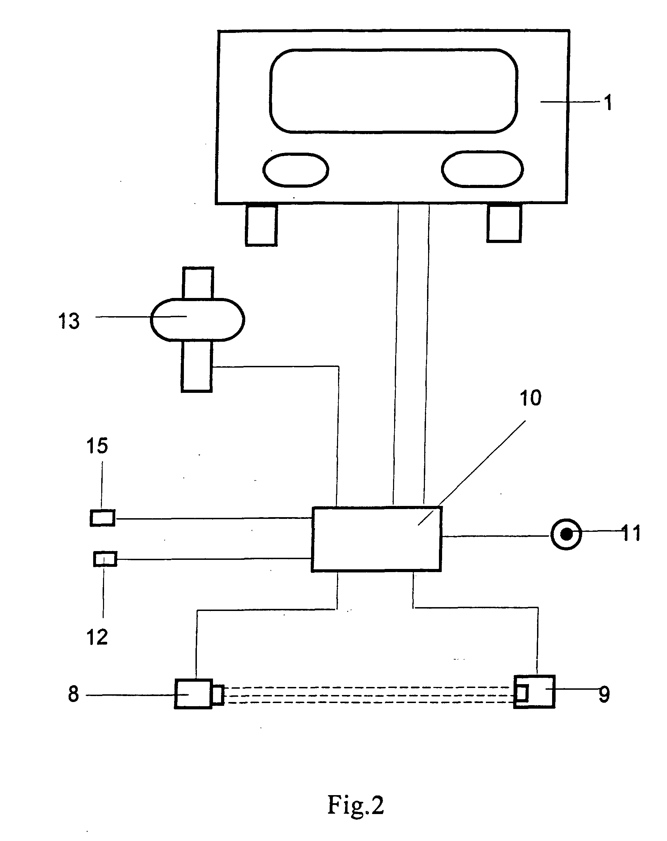

In der Figur 2 ist eine schematische Darstellung der Schaltung dargestellt. In der unteren Aufnahmestellung der Entleereinrichtung ist die Lichtschranke 18 abgeschaltet, da der Müllwerker zunächst den zu entleerenden Behälter an die Entleereinrichtung 2 heranbringen muß. Nachdem der Behälter von der Entleereinrichtung aufgenommen wurde, gibt der Müllwerker durch Betätigung eines elektrischen Tasters den Startbefehl an die Steuereinrichtung 10, die daraufhin ein Magnetventil 13 öffnet, um die Antriebsmotoren, vorzugsweise Kolben/Zylindereinheiten mit Druckmittel zu beaufschlagen. Der Hubvorgang beginnt und wenn die Entleereinrichtung 2 den Positionssensor 12 erreicht, wird über die Steuereinheit 10 der Sender 8 der Lichtschranke aktiviert, der seinerseits mittels seiner Lichtquelle den Empfänger 9 aktiviert. Dieser gibt ein Signal an die Steuereinrichtung 10 und zeigt damit an, daß die Lichtschranke wirksam geschaltet wurde. Unmittelbar danach erfolgt während der Prüfphase ein Selbsttest dadurch, daß der Sender 8 für Bruchteile von Sekunden ausgeschaltet wird. Der Empfänger 9 muß dann zwangsläufig ebenfalls abschalten und der Steuereinrichtung 10 die Funktionslosigkeit signalisieren. Während dieser Zeit, jedoch zeitverzögert, registriert die Steuereinrichtung 10 das Abschalten des Empfängers 9 und damit die sichere Funktion der Lichtschranke. Der Sender 8 wird nach Ablauf der Prüfphase sofort wieder aktiviert und die Lichtschranke 18 geht für den weiteren Entleervorgang in die Überwachungsphase, die erst mit dem Absenken des Müllbehälters und dem Erreichen des zweiten Positionssensors 15 wieder abgeschaltet wird. Der Müllwerker kann so den abgesetzten Behälter wieder von der Entleereinrichtung entfernen. Wenn während der Überwachungsphase die Lichtschranke unterbrochen wird, hat es zur Folge, daß die Vorrichtung sogleich angehalten wird. Der zuvor beschriebene Selbsttest der Lichtschranke 18 findet vor und/oder nach jedem Entleerungszyklus im unteren ungefährdeten Bereich der Entleereinrichtung statt.

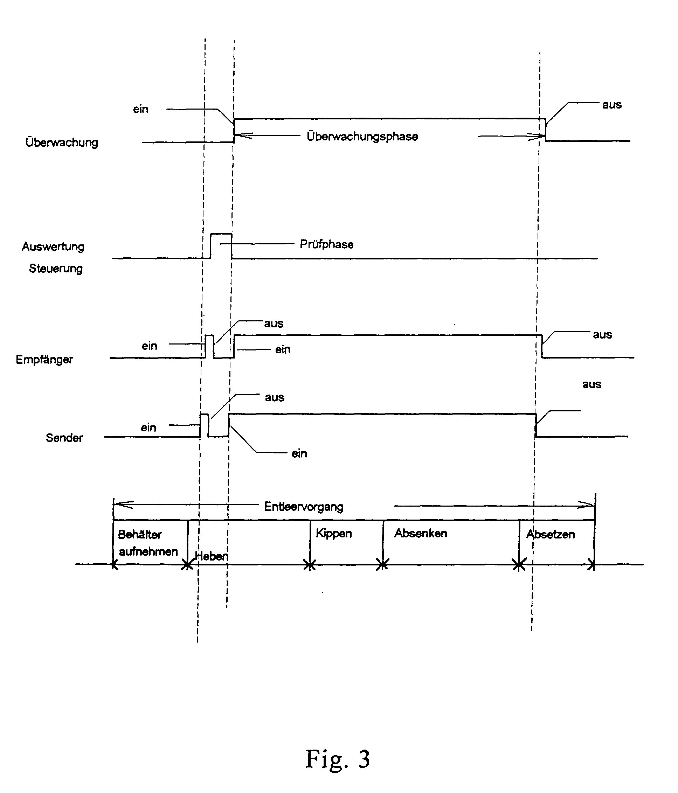

In der Figur 3 ist schematisch die zeitliche Abfolge der einzelnen Phasen dargestellt. Im unteren Teil ist der Entleervorgang in einzelne Sequenzen unterteilt, die darin bestehen, zunächst den Behälter aufzunehmen, diesen zu heben, ihn zu kippen, abzusenken und schließlich abzusetzen. Während eines vorgegebenen Zeitabschnittes während des Entleervorganges ist eine Überwachungsphase vorgesehen, die kürzer ist als der Entleervorgang. Die Überwachungsphase setzt im hier dargestellten Beispiel erst dann ein, wenn der Müllbehälter bereits angehoben wird. Beendet wird die Überwachungsphase kurz vor dem Absetzen des entleerten Behälters.

Dieser Überwachungsphase ist eine Prüfphase vorgeschaltet. Der Sender der Lichtschranke wird zunächst eingeschaltet, woraufhin der Empfänger etwas zeitversetzt ein Signal an die Steuereinrichtung abgibt. Kurz danach beginnt die Prüfphase in der Steuereinrichtung, wobei zuerst anhand des Empfängersignals festgestellt wird, ob die Lichtschranke wirksam geschaltet wurde. Wenn dies der Fall ist, wird unmittelbar danach der Sender für den Bruchteil von Sekunden ausgeschaltet mit der Folge, daß der Empfänger kein Signal mehr meldet. Zeitverzögert zum Ausschalten des Senders wird innerhalb der Prüfphase der Signalpegel des Empfängers ausgewertet. Bei einwandfreier Funktion der Lichtschranke wird kein Ausgangssignal des Empfängers nachgewiesen, woraufhin die Prüfphase beendet wird. Mit der Beendigung der Prüfphase wird der Sender wieder eingeschaltet und die Überwachungsphase beginnt.

## Patentansprüche

1. Verfahren zum Aufnehmen und Entleeren von Müllbehältern in einen Sammelbehälter, bei dem der seitliche Bereich neben der oder den Entleereinrichtungen (2) mittels Barrieren (6,7) abgesichert wird, dadurch gekennzeichnet,
daß mindestens während eines Zeitabschnittes (Überwachungsphase) des Entleervorgangs der Zubringerbereich zwischen den Barrieren (6,7) mittels mindestens einer Lichtschranke (18) abgesichert wird, die bei Unterbrechung den Entleervorgang verhindert oder abbricht,
wobei die Lichtschranke (18) bei jedem Entleervorgang erst dann aktiviert wird, wenn die Entleereinrichtung (2) eine vorgegebene Hubhöhe erreicht hat.

2. Verfahren zum Aufnehmen und Entleeren von Müllbehältern in einen Sammelbehälter, bei dem der seitliche Bereich neben der oder den Entleereinrichtungen (2) mittels Barrieren (6,7) abgesichert wird, dadurch gekennzeichnet,
daß mindestens während eines Zeitabschnittes (Überwachungsphase) des Entleervorgangs der Zubringerbereich zwischen den Barrieren (6,7) mittels mindestens einer Lichtschranke (18) abgesichert wird, die bei Unterbrechung den Entleervorgang verhindert oder abbricht, wobei die Lichtschranke (18) bei jedem Entleervorgang erst dann aktiviert wird, wenn der Müllbehälter an der Entleereinrichtung (2) verriegelt ist.

3. Verfahren nach einem der Ansprüche 1 oder 2, dadurch gekennzeichnet, daß nach der Aktivierung die Lichtschranke (18) überprüft wird.

4. Verfahren nach Anspruch 3, dadurch gekennzeichnet, daß die Prüfphase vor und/oder nach der Überwachungsphase durchgeführt wird.

5. Verfahren nach Anspruch 3 oder 4, dadurch gekennzeichnet, daß zur Überprüfung der Lichtschranke (18) der Sender (8) kurzzeitig abgeschaltet und der Signalpegel des Empfängers (9) der Lichtschranke (18) ausgewertet wird.

6. Verfahren nach Anspruch 5, dadurch gekennzeichnet, daß die Auswertung des Signalpegels des Empfängers (9) zeitverzögert zur Abschaltung des Senders (8) durchgeführt wird.

7. Verfahren nach einem der Ansprüche 2 bis 6, dadurch gekennzeichnet, daß während der Prüfphase der Entleervorgang abgebrochen wird, wenn bei abgeschaltetem Sender (8) ein Empfängersignal nachgewiesen wird.

8. Verfahren nach einem der Ansprüche 1 bis 7, dadurch gekennzeichnet, daß die Überwachungsphase kürzer ist als der Entleervorgang.

9. Verfahren nach einem der Ansprüche 1 bis 8, dadurch gekennzeichnet, daß die Überwachungsphase vor Beendigung des Entleervorganges vorzeitig beendet wird.

10. Vorrichtung zum Aufnehmen und Entleeren von Müllbehältern in Sammelbehälter mit mindestens einer Entleereinrichtung (2) und seitlich der Entleereinrichtung (2) angeordneten Barrieren (6,7), dadurch gekennzeichnet,
daß am freien Ende (16, 17) der Barrieren (6, 7) mindestens eine den Zubringerbereich absichernde Lichtschranke (18) angeordnet ist, wobei der Sender (8) an der einen Barriere (6 oder 7) und der Empfänger (9) gegenüberliegend an der anderen Barriere (6 oder 7) angebracht ist,
daß die Lichtschranke (18) an eine Steuereinrichtung (10) angeschlossen ist, die zur Aktivierung der Lichtschranke (18) während eines Zeitabschnittes (Überwachungsphase) des Entleervorganges und zur Verhinderung oder Unterbrechung des Entleervorgangs bei Unterbrechung der Lichtschranke (18) ausgebildet ist, und
daß die Steuereinrichtung (10) die Lichtschranke (18) erst dann aktiviert, wenn die Entleereinrichtung (2) zu Beginn des Entleervorganges eine vorgegebene Hubhöhe erreicht hat.

11. Vorrichtung nach Anspruch 10, dadurch gekennzeichnet, daß der Entleereinrichtung (2) in der vorgegebenen Hubhöhe mindestens ein erster Positionssensor (12) zugeordnet ist, der an die Steuereinrichtung (10) angeschlossen ist.

12. Vorrichtung zum Aufnehmen und Entleeren von Müllbehältern in Sammelbehälter mit mindestens einer Entleereinrichtung (2) und mit seitlich der Entleereinrichtung (2) angeordneten Barrieren (6,7), dadurch gekennzeichnet,
daß am freien Ende (16, 17) der Barrieren (6, 7) mindestens eine den Zubringerbereich absichernde Lichtschranke (18) angeordnet ist, wobei der Sender (8) an der einen Barriere (6 oder 7) und der Empfänger (9) gegenüberliegend an der anderen Barriere (6 oder 7) angebracht ist,
daß die Lichtschranke (18) an eine Steuereinrichtung (10) angeschlossen ist, die zur Aktivierung der Lichtschranke (18) während eines Zeitabschnittes (Überwachungsphase) des Entleervorganges und zur Verhinderung oder Unterbrechung des Entleervorgangs bei Unterbrechung der Lichtschranke (18) ausgebildet ist, und daß die Steuereinrichtung (10) die Lichtschranke (18) erst dann aktiviert, wenn der Müllbehälter an der Entleereinrichtung (2) verriegelt ist.

13. Vorrichtung nach einem der Ansprüche 10 bis 12, dadurch gekennzeichnet, daß die Steuereinrichtung (10) die Steuereinrichtung der Entleereinrichtung (2) ist.

14. Vorrichtung nach einem der Ansprüche 10 bis 13, dadurch gekennzeichnet, daß die Steuereinrichtung (10) zur Überprüfung der Lichtschranke (18) ausgebildet ist.

15. Vorrichtung nach einem der Ansprüche 10 bis 14, dadurch gekennzeichnet, daß der Entleereinrichtung (2) mindestens ein zweiter Positionssensor (15) in vorgegebener Höhe zugeordnet ist, der beim Zurückbewegen der Entleereinrichtung (2) beaufschlagbar und an die Steuereinrichtung (10) angeschlossen ist.

16. Vorrichtung nach einem der Ansprüche 10 bis 15, dadurch gekennzeichnet, daß die Steuereinrichtung (10) mit einer Anzeigeeinrichtung (11) verbunden ist, die die aktive oder inaktive Funktion der Lichtschranke (18) anzeigt.

17. Vorrichtung nach einem der Ansprüche 10 bis 16, dadurch gekennzeichnet, daß die Lichtschranke (18) oder mindestens eine weitere Lichtschranke innerhalb des Arbeitsbereichs der Entleereinrichtung (2) im Aufenthaltsbereich des Bedienungspersonals angeordnet ist.

## Claims

1. Method for picking up and emptying refuse containers into a collecting container, in which the lateral region near the emptying device(s) (2) is protected by means of barriers (6, 7), characterised in that,
at least during one period (monitoring stage) of the emptying operation, the feeder region between the barriers (6, 7) is protected by means of at least one light beam (18) which, when interrupted, prevents or breaks off the emptying operation,
the light beam (18) not being activated in each emptying operation until the emptying device (2) has reached a predetermined lifting height.

2. Method for picking up and emptying refuse containers into a collecting container, in which the lateral region near the emptying device(s) (2) is protected by means of barriers (6, 7), characterised in that,
at least during one period (monitoring stage) of the emptying operation, the feeder region between the barriers (6, 7) is protected by means of at least one light beam (18) which, when interrupted, prevents or breaks off the emptying operation, the light beam (18) not being activated in each emptying operation until the refuse container has been locked on the emptying device (2).

3. Method according to either claim 1 or claim 2, characterised in that, after activation, the light beam (18) is checked.

4. Method according to claim 3, characterised in that the checking stage is carried out before and/or after the monitoring stage.

5. Method according to claim 3 or 4, characterised in that, in order to check the light beam (18), the transmitter (8) is switched off for a short time and the signal level of the receiver (9) of the light beam (18) is evaluated.

6. Method according to claim 5, characterised in that the evaluation of the signal level of the receiver (9) is carried out in a time-delayed manner with respect to the switching-off of the transmitter (8).

7. Method according to any one of claims 2 to 6, characterised in that, during the checking stage, the emptying operation is broken off when, with the transmitter (8) switched off, a receiver signal is detected.

8. Method according to any one of claims 1 to 7, characterised in that the monitoring stage is shorter than the emptying operation.

9. Method according to any one of claims 1 to 8, characterised in that the monitoring stage is completed prematurely before the emptying operation is completed.

10. Apparatus for picking up and emptying refuse containers into collecting containers, having at least one emptying device (2) and barriers (6, 7) which are arranged at the side of the emptying device (2), characterised in that
at least one light beam (18) protecting the feeder region is arranged at the free end (16, 17) of the barriers (6, 7),
the transmitter (8) being fitted on the one barrier (6 or 7) and the receiver (9) being fitted opposite it on the other barrier (6 or 7),
the light beam (18) is connected to a control device (10) which is constructed to activate the light beam (18) during one period (monitoring stage) of the emptying operation and to prevent or interrupt the emptying operation when the light beam (18) is interrupted, and
the control device (10) does not activate the light beam (18) until the emptying device (2) has reached a predetermined lifting height at the beginning of the emptying operation.

11. Apparatus according to claim 10, characterised in that at least a first position sensor (12) connected to the control device (10) is associated with the emptying device (2) at the predetermined lifting height.

12. Apparatus for picking up and emptying refuse containers into collecting containers, having at least one emptying device (2) and having barriers (6, 7) arranged at the side of the emptying device (2), characterised in that
at least one light beam (18) protecting the feeder region is arranged at the free end (16, 17) of the barriers (6, 7), the transmitter (8) being fitted on the one barrier (6 or 7) and the receiver (9) being fitted opposite it on the other barrier (6 or 7),
the light beam (18) is connected to a control device (10) which is constructed to activate the light beam (18) during one period (monitoring stage) of the emptying operation and to prevent or interrupt the emptying operation when the light beam (18) is interrupted, and
the control device (10) does not activate the light beam (18) until the refuse container has been locked on the emptying device (2).

13. Apparatus according to any one of claims 10 to 12, characterised in that the control device (10) is the control device of the emptying device (2).

14. Apparatus according to any one of claims 10 to 13, characterised in that the control device (10) is constructed to check the light beam (18).

15. Apparatus according to any one of claims 10 to 14, characterised in that at least a second position sensor (15) which can be acted upon when the emptying device (2) moves back and which is connected to the control device (10) is associated with the emptying device (2) at the predetermined height.

16. Apparatus according to any one of claims 10 to 15, characterised in that the control device (10) is connected to a display device (11) which displays the active or inactive function of the light beam (18).

17. Apparatus according to any one of claims 10 to 16, characterised in that the light beam (18) or at least one further light beam is arranged within the operating range of the emptying device (2) in the region where the operating personnel stand.

## Revendications

1. Procédé de ramassage et de vidage de poubelles dans un récipient collecteur, dans lequel la zone latérale proche du ou des dispositifs de vidage (2) est sécurisée au moyen de barrières (6,7), caractérisé en ce que :
au moins au cours d'un intervalle de temps (phase de surveillance) de l'opération de vidage, la zone de ramassage entre les barrières (6,7) est sécurisée au moyen d'au moins une barrière photo-électrique (18), qui, en cas d'interruption, empêche ou arrête l'opération de vidage,
la barrière photo-électrique (18) n'étant activée au cours de chaque opération de vidage que lorsque le dispositif de vidage (2) a atteint une hauteur de levage prédéterminée.

2. Procédé de ramassage et de vidage de poubelles dans un récipient collecteur, dans lequel la zone latérale, qui se trouve à côté du ou des dispositifs de vidage (2), est sécurisée par des barrières (6,7), caractérisé en ce que :
au moins au cours d'un intervalle de temps (phase de surveillance) de l'opération de vidage, la zone de ramassage entre les barrières (6,7) est sécurisée au moyen d'au moins une barrière photo-électrique (18), qui, en cas d'interruption, empêche ou arrête l'opération de vidage, la barrière photo-électrique (18) n'étant activée au cours de chaque opération de vidage que lorsque la poubelle est verrouillée sur le dispositif de vidage (2).

3. Procédé selon l'une quelconque des revendications 1 ou 2, caractérisé en ce que la barrière photo-électrique (18) est contrôlée après activation.

4. Procédé selon la revendication 3, caractérisé en ce que la phase de test est réalisée avant et/ou après la phase de surveillance.

5. Procédé selon la revendication 3 ou 4, caractérisé en ce que, pour contrôler la barrière photo-électrique (18), l'émetteur (8) est déconnecté un court intervalle et le niveau du signal du récepteur (9) de la barrière photo-électrique (18) est exploité.

6. Procédé selon la revendication 5, caractérisé en ce que l'exploitation du niveau de signal du récepteur (9) est réalisée avec un certain retard dans le temps par rapport à la déconnexion de l'émetteur (8).

7. Procédé selon l'une quelconque des revendications 2 à 6, caractérisé en ce que, pendant la phase de test, l'opération de vidage est arrêtée si, lorsque l'émetteur (8) est déconnecté, on décèle un signal du récepteur.

8. Procédé selon l'une quelconque des revendications 1 à 7, caractérisé en ce que la phase de surveillance est plus courte que l'opération de vidage.

9. Procédé selon l'une quelconque des revendications 1 à 8, caractérisé en ce que la phase de surveillance est terminée bien avant la fin de l'opération de vidage.

10. Dispositif de ramassage et de vidage de poubelles dans un récipient collecteur comprenant au moins un dispositif de vidage (2) et des barrières (6,7) agencées latéralement au dispositif de vidage (2), caractérisé en ce que :
à l'extrémité libre (16,17) des barrières (6,7) est agencée au moins une barrière photo-électrique (18) sécurisant la zone de ramassage, l'émetteur (8) étant monté sur la première barrière (6 ou7) et le récepteur (9) en regard sur l'autre barrière (6 ou 7),
la barrière photo-électrique (18) est connectée à un dispositif de commande (10), qui est conformé pour activer la barrière photo-électrique (18) au cours d'un intervalle de temps (phase de surveillance) de l'opération de vidage et empêcher ou arrêter l'opération de vidage en cas d'interruption de la barrière photo-électrique (18), et
le dispositif de commande (10) n'active la barrière photo-électrique (18) que lorsque le dispositif de vidage (2) a atteint une hauteur de levage prédéterminée au début de l'opération de vidage.

11. Dispositif selon la revendication 10, caractérisé en ce qu'au dispositif de vidage (2) est affecté, à hauteur de levage prédéterminée, au moins un premier capteur de position (12) qui est connecté au dispositif de commande (10).

12. Dispositif de ramassage et de vidage de poubelles dans un récipient collecteur ayant au moins un dispositif de vidage (2) et des barrières (6,7) agencées latéralement par rapport au dispositif de vidage (2), caractérisé en ce que :
à l'extrémité libre (16,17) des barrières (6,7) est agencée au moins une barrière photo-électrique (18) sécurisant la zone de ramassage, l'émetteur (8) étant agencé sur la première barrière (6 ou 7) et le récepteur (9) en regard sur l'autre barrière (6 ou 7),
la barrière photo-électrique (18) est connectée à un dispositif de commande (10) qui est conçu pour activer la barrière photo-électrique (18) au cours d'un intervalle de temps (phase de surveillance) de l'opération de vidage pour empêcher ou arrêter l'opération de vidage en cas d'interruption de la barrière photo-électrique (18), et que le dispositif de commande (10) n'active la barrière photo-électrique (18) que lorsque la poubelle est verrouillée sur le dispositif de vidage (2).

13. Dispositif selon l'une quelconque des revendications 10 à 12, caractérisé en ce que le dispositif de commande (10) est le dispositif de commande du dispositif de vidage (2).

14. Dispositif selon l'une quelconque des revendications 10 à 13, caractérisé en ce que le dispositif de commande (10) est conçu pour contrôler la barrière photo-électrique (18).

15. Dispositif selon l'une quelconque des revendications 10 à 14, caractérisé en ce qu'au dispositif de vidage (2) est affecté au moins un deuxième capteur de position (15) à hauteur prédéterminée, qui peut être sollicité lors du déplacement de retour du dispositif de vidage (2) et est connecté au dispositif de commande (10).

16. Dispositif selon l'une quelconque des revendications 10 à 15, caractérisé en ce que le dispositif de commande (10) est raccordé à un dispositif d'affichage (11), qui affiche la fonction active ou inactive de la barrière photo-électrique (18).

17. Dispositif selon l'une quelconque des revendications 10 à 16, caractérisé en ce que la barrière photo-électrique (18) ou au moins une autre barrière photo-électrique est installée à l'intérieur de la zone de travail du dispositif de vidage (2) dans la zone de séjour du personnel de service.
